# EUROPÄISCHE PATENTANMELDUNG

(11) **EP 2 163 836 A2**
(43) Veröffentlichungstag der Anmeldung: **17.03.2010**
(21) Anmeldenummer: 09170424.7
(22) Anmeldetag: 16.09.2009
(51) Int. Cl.: F24J 2/54, A01G 3/04, E01F 8/00

(54) **Trag-Einrichtung für Solarkollektoren**

(30) Priorität: 16.09.2008 DE 102008047332
(71) Anmelder: Thielhorn, Wulf, 33330 Gütersloh (DE)
(72) Erfinder: Thielhorn, Wulf, 33330 Gütersloh (DE)
(74) Vertreter: Alber, Norbert

(57) **Zusammenfassung**

Die Erfindung betrifft eine Trageinrichtung (8), um Solarkollektoren (2) auf Lärmschutzwänden (3) aufzusetzen, insbesondere unter Nutzung der in der Oberkante (5) der Lärmschutzwände (3) ohnehin vorhandenen Transportgewinde (6).

## Beschreibung

### I. Anwendungsgebiet

Die Erfindung betrifft die Befestigung von Solarkollektoren.

### II. Technischer Hintergrund

Die relativ großflächigen, insbesondere photovoltaischen Solarkollektoren sind bei Stürmen großen Windbelastungen ausgesetzt, so dass ihre Trag-Einrichtungen sehr stabil und damit auch teuer ausgebildet sein müssen.

### III. Darstellung der Erfindung

### a) Technische Aufgabe

Die Aufgabe der Erfindung ist es, diese bekannten Nachteile zu vermeiden, und eine Trag-Einrichtung für Solarkollektoren zu offenbaren, die relativ preiswert und sehr vielseitig einzusetzen ist.

### b) Lösung der Aufgabe

Diese Aufgabe wird durch die Merkmale des Anspruchs 1 gelöst. Vorteilhafte Ausführungsformen ergeben sich aus den Unteransprüchen.

Zu diesem Zweck ist die Erfindung durch die in den Ansprüchen genannten Merkmale gekennzeichnet.

Lärmschutzwände stehen in der Regel entlang von Straßen und Autobahnen oder Bahnlinien, manchmal auch zur Abgrenzung von Gewerbegebieten gegenüber Wohngebieten.

Sie bestehen meist aus durchgehenden, senkrecht oder schräg aufwärts gerichteten plattenförmigen Wandelementen, die häufig zwischen Pfosten befestigt sind.

Erfindungsgemäß wird vorgeschlagen, solche Lärmschutzwände als tragende Basis für Solarkollektoren zu benutzen, indem die Solarkollektoren entweder direkt oder indirekt mittels einer entsprechenden Trageinrichtung an den Lärmschutzwänden befestigt werden, insbesondere von der Oberkante der Lärmschutzwände aus abragend, insbesondere nach oben abragend.

Gerade bei Lärmschutzwänden an Straßen kommt dabei nur ein Abragen vertikal nach oben oder auf die von der Straße abgewandten Seite in Frage, um den für die Straße notwendigen Freiraum nicht zu verkleinern.

Da die Lärmschutzwände häufig aus großflächigen Elementen, beispielsweise Betonplatten, bestehen, die etwa zwischen zwei begrenzende Pfosten gesetzt werden oder auch mit ihrer Unterkante direkt im Untergrund fixiert werden, sind für das Anliefern und Setzen der Lärmschutzwände in derer oberer Stirnfläche meistens Transportgewinde vorgesehen, die in die Traghaken eingeschraubt werden können, so dass die Lärmschutzwand oder ein Element davon mittels eines Krans oder eines anderen Hebegerätes angehoben und transportiert werden kann.

Erfindungsgemäß wird bevorzugt vorgeschlagen, diese Transportgewinde nach dem Erstellen der Lärmschutzwand auch zum Befestigen der Solarkollektoren oder deren Trageinrichtung zu verwenden, indem entsprechende Gewindezapfen in diese Transportgewinde eingeschraubt werden, die Teil der Trageinrichtung oder der Solarkollektoren sind.

Dazwischen, also zwischen der Befestigung an der Lärmschutzwand, die insbesondere mittels in das Transportgewinde eingeschraubten Gewindebolzens geschieht, und der Trageinrichtung oder dem Solarkollektor ist vorzugsweise wenigstens ein Gelenk vorhanden, um den Solarkollektor in seiner Neigung, insbesondere um eine horizontale Achse, ggf. jedoch auch um eine Hochachse, in die gewünschte Stellung bringen zu können.

Solche Gelenke können nach einmaliger Einstellung fixiert werden, oder sie können über Steuereinrichtungen automatisch angesteuert werden und die Solarkollektoren in ihrer Neigung automatisch bewegen, beispielsweise dem Sonnenstand nachführen. Dies können beispielsweise Drehgestänge, Hubgestänge oder Ähnliches sein, und die Steuereinrichtungen werden in der Regel einen Antriebsmotor umfassen, um diese Gestänge zu betätigen.

Dabei können entweder die Solarkollektoren in unveränderbarer Position an der Trageinrichtung befestigt sein und diese verstellbar an der Lärmschutzwand, oder die Trageinrichtung ist in einer festen Position an der Lärmschutzwand befestigt, und statt dessen sind die Solarkollektoren beweglich gegenüber der Trageinrichtung angeordnet.

Die Trageinrichtung, die in der Regel auf der Rückseite der Solarkollektoren angeordnet ist und diesen abstützt, kann vorzugsweise ein Metallgestell oder ebenfalls eine Betonplatte sein, und zusätzlich oder statt der Befestigung in den Transportgewinden kann sich das Traggestell auf der von der Straße abgewandten Rückseite, also derjenigen Seite, auf die sich der Solarkollektor hinneigt, abgestützt werden, um eine besonders stabile Trageinrichtung zu schaffen.

Die Befestigung der Trageinrichtung muss auch nicht direkt an der Lärmschutzwand erfolgen, sondern es kann dort ein separates Zwischenglied angeordnet sein, welches spezifisch für die Befestigung der Solarkollektoren oder deren Trageinrichtungen ausgebildet ist, beispielsweise dann, wenn die Transportgewinde nicht tief genug sind oder überhaupt nicht vorhanden sind, so dass erst in dem Zwischenglied entsprechende Befestigungseinrichtungen wie Gewinde etc. vorhanden sind.

Selbstverständlich können die Solarkollektoren oder die Trageinrichtungen statt mit den plattenförmigen Elementen der Lärmschutzwand auch mit dem diese plattenförmigen Elemente häufig tragenden Pfosten verbunden sein, die zwischen den einzelnen Platten der Lärmschutzwand stehen.

Die Solarkollektoren können über die beschriebenen Steuereinrichtungen einzeln oder gruppenweise, insbesondere über eine Länge von mehreren plattenförmigen Elementen von Lärmschutzwänden hinweg, gemeinsam in ihrer Drehlage gesteuert werden.

Vorzugsweise ist auf der Rückseite der Solarkollektoren und insbesondere deren Trageinrichtung eine Heckenschere angeordnet, die entlang der Trageinrichtung oder der Solarkollektoren in Längsrichtung der Lärmschutzwand verfahrbar ist, und dort hochwachsenden Gewuchs entfernen kann.

### c) Ausführungsbeispiele

Mehrere Ausführungsbeispiele der Erfindung sind in den Zeichnungen schematisch dargestellt.

Es zeigen:
Fig. 1 eine Lärmschutzwand mit einer Trag-Einrichtung für Solarkollektoren, im Schnitt,
Fig. 2 einen vergrößerten Ausschnitt der Trag-Einrichtung von Fig. 1,
Fig. 3 die Lärmschutzwand mit einer Trag-Einrichtung der Fig. 1 in gekippter Stellung,

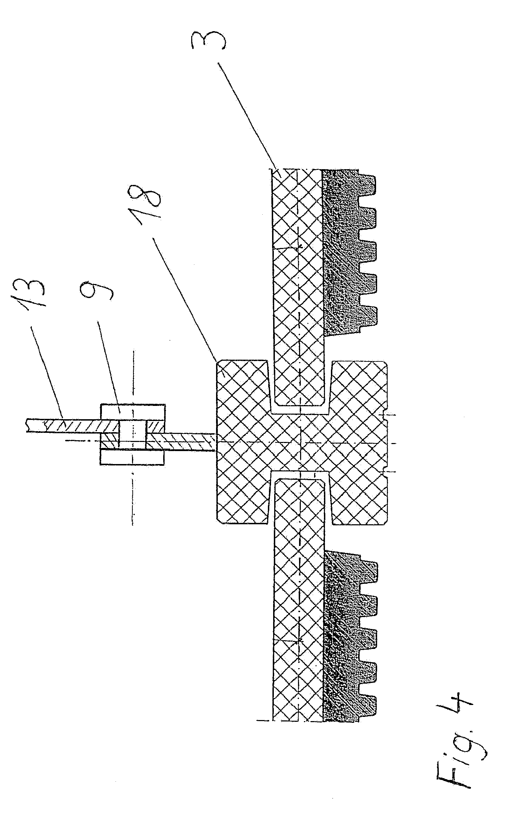

Fig. 4 die Lärmschutzwände und ein Pfosten, im Horizontal-Schnitt.

Die Trag-Einrichtung für die Solarkollektoren 2 wird von einer Lärmschutzwand 3 oder von Teilen 4 einer Lärmschutzwand 3 gebildet.

Lärmschutzwände 3 sind relativ schwer, und wenn sie aus Beton gefertigt sind, besitzen sie in ihrem oberen Bereich 5 Transportgewinde 6, über die sie bei der Fertigung, beim Transport und beim Einbau auf der Baustelle bewegt und transportiert werden können.

Vorzugsweise ist die Verbindung zwischen den Solarkollektoren 2 und/oder deren Trageinrichtung 8 und der Lärmschutzwand 3 als Gelenk 7 ausgebildet.

Die Solarkollektoren 2 sind auf einer Trag-Einrichtung 8 befestigt, und die Trag-Einrichtung 8 ist ebenfalls über Gelenke 9 mit der Lärmschutzwand 3 verbunden.

Die Trag-Einrichtung 8 kann aus einem Metall-Gestell 10 oder auch aus einer Beton-Platte 11 bestehen.

Wenn das Metall-Gestell 10 ankerschienenförmige Leisten besitzt, können die Solarkollektoren 2 - unabhängig von ihren Abmessungen - über Ankerschrauben oder dergl. an dem Metall-Gestell 10 befestigt werden.

Die Trag-Einrichtung 8 kann zusätzlich noch über Stützen 13 an ihrer Rückseite mit der Lärmschutzwand 3 verbunden und an deren Rückseite abgestützt sein.

Die Stützen 13 sind ebenfalls vorzugsweise mit der Lärmschutzwand 3 und /oder mit der Trag-Einrichtung 8 über Gelenke 9 verbunden.

Über diese Gelenke 9 sind die Solarkollektoren 2 einstell- und/oder verstellbar mit der Lärmschutzwand 3 verbunden.

Die Verstellbarkeit der Solarkollektoren 2 kann über Steuereinrichtungen 14 erfolgen.

Die Steuereinrichtungen 14 selbst können aus Hub-, Schub, und/oder Drehgestängen 15 bestehen.

Die Hub-, Schub- und/oder Drehgestänge 15 können mit Antriebsmotoren 16 verbunden sein, so dass die Solarkollektoren 2 auch vollautomatisch dem Sonnenstand nachgeführt werden können.

Die Solarkollektoren 2 und/oder die Trag-Einrichtungen 8 sind ebenfalls über die Steuereinrichtungen 14 steuerbar.

Die Trag-Einrichtung 8 kann direkt oder über ein Zwischenglied 17, das insbesondere auf der Oberkante der Lärmschutzwand 3 sitzt, mit der Lärmschutzwand 3 oder dem Transportgewinde 6 verbunden sein.

Der Teil 4 einer Lärmschutzwand 3 kann von seitlich neben der Lärmschutzwand 3 angeordneten Pfosten 18 gebildet werden. Die mit der Lärmschutzwand 3 in Verbindung stehenden Gelenke 7 und 9 sind dann ebenfalls mit den Pfosten 18 verbunden.

Die Solarkollektoren 2 jeder Lärmschutzwand 3 können von einer den Antriebsmotor 16 und die Hub-, Schub- und/oder Drehgestänge 15 und 19 betätigenden separaten Steuereinrichtung 14 gesteuert werden.

Es ist jedoch auch möglich, dass die Solarkollektoren 2 einer Gruppe von mehreren Lärmschutzwänden 3 über Hub-, Schub- und/oder Drehgestänge 19 miteinander verbunden sind, und dass diese Gruppe von Lärmschutzwänden 3 über diese Hub-, Schub- und/oder Drehgestänge 19 von einer gemeinsamen Steuereinrichtung 14 gesteuert werden.

Unterhalb der Trag-Einrichtung 8, der Stützen 13 und der Hub-, Schub-und/oder Drehgestänge 15 und 19 kann eine heckenscherenförmige Schneideinrichtung 20 angeordnet sein, die insbesondere an der Unterseite der Trageinrichtung 8 in Verlaufsrichtung der Trageinrichtung verfahrbar ist.

Mit der heckenscherenförmigen Schneideinrichtung können in dem Raum unterhalb der Trag-Einrichtung 8, der Stützen 13 und der Hub-, Schub-und/oder Drehgestänge 15 und 19 in den Vegetationsperioden nachwachsende Äste benachbarter Bäume oder dergl. abgeschnitten werden.

Wenn die heckenscherenförmige Schneideinrichtung 20 ebenfalls von der Steuereinrichtung 14 oder einer separaten Steuereinrichtung gesteuert wird, kann der Betrieb der Solarkollektoren 2 mit einem minimalen Pflegeaufwand praktisch vollautomatisch ablaufen.

Da die erfindungsgemäße Trag-Einrichtung 1 auf bereits vorhandenen oder auf aus Lärmschutzgründen zu erstellenden Lärmschutzwänden 3 montiert wird, sind die Herstellungskosten relativ gering.

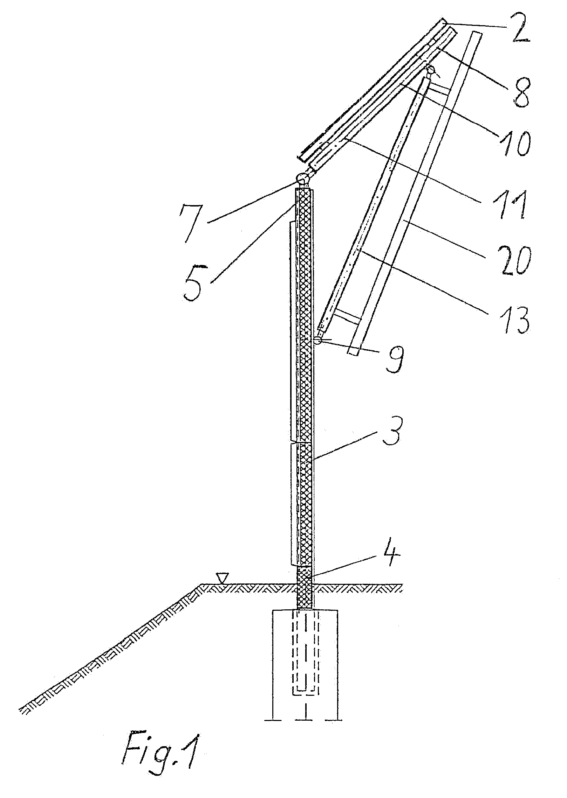

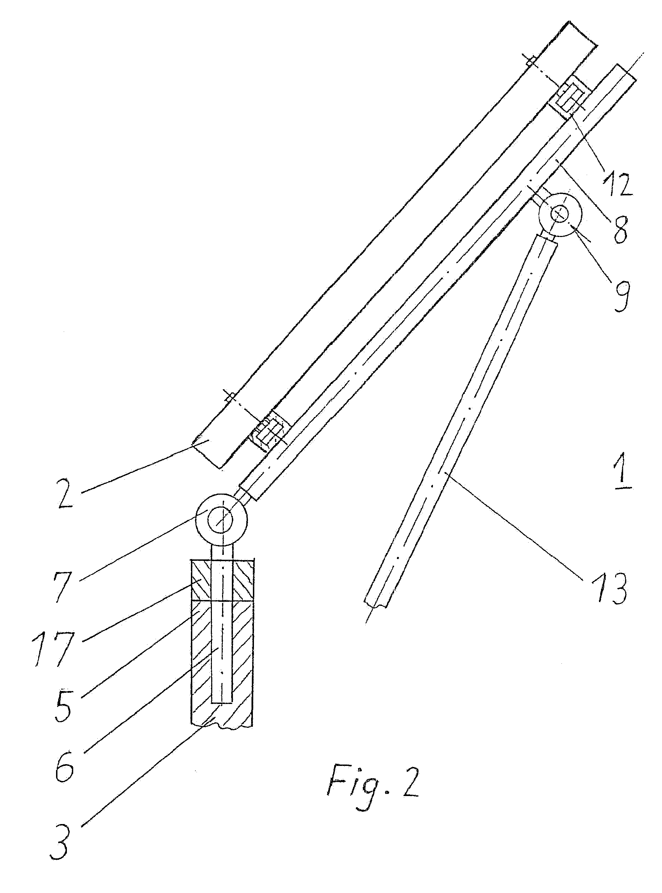

Bei solartechnisch günstig verlaufenden Lärmschutzwänden 3 können die Solarkollektoren 2 in der in den Fig. 1 und 2 gezeigten Anordnung montiert werden, also von der Oberkante schräg nach oben, von der Straße weg geneigt.

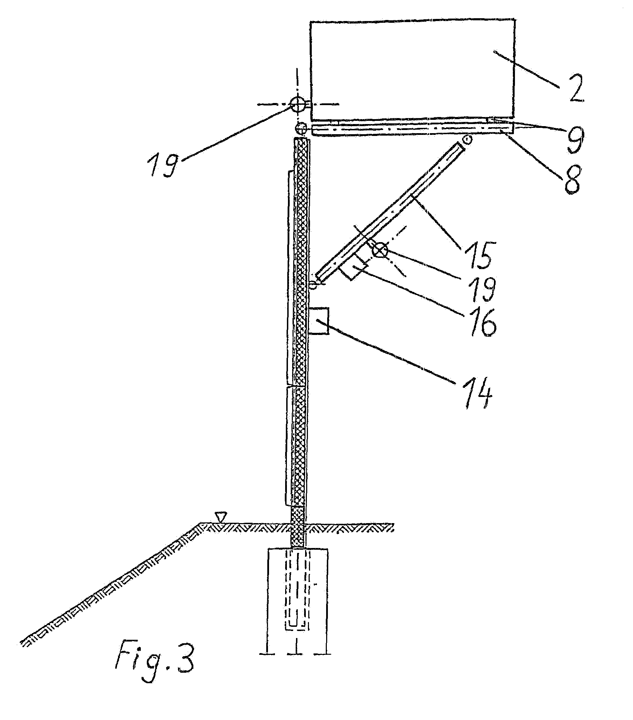

Bei ungünstig verlaufenden Lärmschutzwänden 3 werden die Solarkollektoren 2 auf der in der Fig. 3 gezeigten horizontal liegenden Anordnung der Trageinrichtung 8 und insbesondere querstehend zur Lärmschutzwand 3 montiert. Dadurch wird eine gegenseitige Beschattung der Solarkollektoren 2 vermieden, so dass auch auf solartechnisch ungünstig verlaufenden Lärmschutzwänden 3 die Solarkollektoren 2 optimale Leistung erbringen.

Da Lärmschutzwände 3 immer im Bereich einer Wohnungsbebauung angeordnet sind oder errichtet werden, ist auch immer ein Einspeisungspunkt für den von den Solarkollektoren 2 erzeugten Strom vorhanden.

### BEZUGSZEICHENLISTE

- 1: Trag-Einrichtung
- 2: Solarkollektor
- 3: Lärmschutzwand
- 4: Teile einer Lärmschutzwand
- 5: Oberkante
- 6: Transportgewinde
- 7: Gelenk
- 8: Trageinrichtung
- 9: Gelenke
- 10: Metall-Gestell
- 11: Beton-Platte
- 13: Stützen
- 14: Steuereinrichtungen
- 15: Gestänge
- 16: Antriebsmotoren
- 17: Zwischenglied
- 18: Pfosten
- 19: Drehgestänge
- 20: Schneideinrichtung

## Patentansprüche

1. Trag-Einrichtung für Solarkollektoren (2), **dadurch gekennzeichnet, dass** die Trag-Einrichtung (8) für die Solarkollektoren (2) von einer Lärmschutzwand (3) oder von Teilen (4) einer Lärmschutzwand (3) gebildet werden.

2. Trag-Einrichtung für Solarkollektoren nach Anspruch 1, **dadurch gekennzeichnet, dass** die Lärmschutzwand (3) Transportgewinde (6) besitzt, und dass sie über diese Transportgewinde (6) mit den Solarkollektoren (2) oder deren Trageinrichtung (8) verbunden ist.

3. Trag-Einrichtung nach Anspruch 1 oder 2, **dadurch gekennzeichnet, dass** die Verbindung zwischen den Solarkollektoren (2) und der Lärmschutzwand (3) als Gelenk (7) ausgebildet ist.

4. Trag-Einrichtung nach mindestens einem der Ansprüche 1 bis 3, **dadurch gekennzeichnet, dass**
- die Solarkollektoren (2) auf einer Trag-Einrichtung (8) befestigt sind, und dass die Trag-Einrichtung (8) über Gelenke (7) mit der Lärmschutzwand (3) verbunden ist, und insbesondere
- die Trag-Einrichtung (8) ein Metall-Gestell (10) oder eine Beton-Platte (11) umfasst.

5. Trag-Einrichtung nach mindestens einem der Ansprüche 1 bis 4, **dadurch gekennzeichnet, dass** die Trag-Einrichtung (8), insbesondere auf der Rückseite, zusätzlich über Stützen (13) mit der Lärmschutzwand (3) verbunden ist, insbesondere auf deren Rückseite abgestützt ist.

6. Trag-Einrichtung nach Anspruch 5, **dadurch gekennzeichnet, dass**
- die Stützen (13) mit der Lärmschutzwand (3) und/oder mit der TragEinrichtung (8) über Gelenke (9) verbunden sind, und insbesondere
- die Solarkollektoren (2) und/oder die Trageinrichtung (8) über die Gelenke (9) einstell- und/oder verstellbar mit der Lärmschutzwand (3) verbunden sind.

7. Trag-Einrichtung nach einem der vorhergehenden Ansprüche, **dadurch gekennzeichnet, dass**
- die Solarkollektoren (2) über Steuereinrichtungen (14) um eine horizontale Achse und/oder eine vertikale Achse verstellbar mit der Lärmschutzwand (3) verbunden sind,
- die Steuereinrichtungen (14) insbesondere aus Hub-, Schub- und/oder Drehgestängen (15) bestehen, wobei
- die Hub-, Schub- und/oder Drehgestänge (15) vorzugsweise mit Antriebsmotoren (16) verbunden sind.

8. Trag-Einrichtung nach mindestens einem der Ansprüche 1 bis 7, **dadurch gekennzeichnet, dass** die Solarkollektoren (2) fest mit der TragEinrichtung (8) verbunden sind, und dass die Trag-Einrichtung (8) mit den Solarkollektoren (2) von der Steuereinrichtung (14) gesteuert werden, insbesondere automatisch gesteuert werden.

9. Trag-Einrichtung nach mindestens einem der Ansprüche 1 bis 7, **dadurch gekennzeichnet, dass** die Solarkollektoren (2) verstellbar mit der TragEinrichtung (8) verbunden sind, und dass die Trag-Einrichtung (8) und/oder die Solarkollektoren (2) von der Steuereinrichtung (14) separat gesteuert werden, insbesondere automatisch gesteuert werden.

10. Trag-Einrichtung nach mindestens einem der Ansprüche 1 bis 9, **dadurch gekennzeichnet, dass** die Trag-Einrichtung (8) direkt oder über ein Zwischenglied (17), das insbesondere auf der Oberkante der Lärmschutzwand (3) angeordnet ist, mit der Lärmschutzwand (3) oder dem Transportgewinde (6) verbunden ist.

11. Trag-Einrichtung nach mindestens einem der Ansprüche 1 bis 10, **dadurch gekennzeichnet, dass** ein Teil (4) der Lärmschutzwand (3) von seitlich neben der eigentlichen Lärmschutzwand (3) angeordneten Pfosten (18) gebildet wird, und dass die Gelenke (7) und/oder (9) mit den Pfosten (18) verbunden sind.

12. Trag-Einrichtung nach mindestens einem der Ansprüche 1 bis 11, **dadurch gekennzeichnet, dass** die Solarkollektoren (2) jeder Lärmschutzwand (3) von einer den Antriebsmotor (16) und die Hub-, Schub- und/oder Drehgestänge (15 und 19) betätigenden separaten Steuereinrichtung (14) gesteuert werden.

13. Trag-Einrichtung nach mindestens einem der Ansprüche 1 bis 11, **dadurch gekennzeichnet, dass** die Solarkollektoren (2) einer Gruppe von mehreren Lärmschutzwänden (3) über Hub-, Schub- und/oder Drehgestänge (19) miteinander verbunden sind, und dass diese Gruppe von Lärmschutzwänden (3) über diese Hub-, Schub- und/oder Drehgestänge (19) von einer gemeinsamen Steuereinrichtung (14) gesteuert werden.

14. Trag-Einrichtung nach mindestens einem der Ansprüche 1 bis 13, **dadurch gekennzeichnet, dass** unterhalb der Trag-Einrichtung (8), der Stützen (13) und/oder der Hub-, Schub- und/oder Drehgestänge (15 und 19) eine heckenscherenförmige Schneideinrichtung (20) verfahrbar in Verlaufsrichtung der Trag-Einrichtung (8) angeordnet ist.

15. Verfahren zum Betrieb einer Trag-Einrichtung für Solarkollektoren nach mindestens einem der Ansprüche 1 bis 14, **dadurch gekennzeichnet, dass**
- die heckenscherenförmige Schneideinrichtung (20) in dem Raum unterhalb der Trag-Einrichtung (8), der Stützen (13) und der Hub-, Schub-und/oder Drehgestänge (15 und 19) in den Vegetationsperioden nachwachsende Äste benachbarter Bäume oder dergl. abschneidet, und insbesondere
- die heckenscherenförmige Schneideinrichtung (20) ebenfalls von der Steuereinrichtung (14) oder einer separaten Steuereinrichtung gesteuert wird.
